**Europäisches Patentamt**

**European Patent Office**

**Office européen des brevets**

(19)

(11) Veröffentlichungsnummer: **0 195 894**
A2

# EUROPÄISCHE PATENTANMELDUNG

(21) Anmeldenummer: **86100984.3**

(22) Anmeldetag: **24.01.86**

(51) Int. Cl.⁴: **H 02 B 1/24**

(30) Priorität: **23.02.85 DE 3506383**

(43) Veröffentlichungstag der Anmeldung: **01.10.86**
**Patentblatt 86/40**

(84) Benannte Vertragsstaaten: **AT BE CH DE FR LI NL SE**

(71) Anmelder: **Sachsenwerk Licht- und Kraft-Aktiengesellschaft, Einhauserstrasse 9, D-8400 Regensburg (DE)**

(72) Erfinder: **Reichl, Erwin, Spessartstrasse 4, D-8401 Tegernheim (DE)**

(54) **Elektrische Schaltanlagen und Schaltverfahren dieser Anlage.**

(57) Die Erfindung betrifft eine Schaltanlage und Schaltverfahren mit zwei Sammelschienen (SS1 und SS2) und einem Kuppelschalter (S1), der in Verbindung mit Mehrstellungstrennschaltern (4) die Leistungs- und Schalthandlungen vornimmt.

Wesentlich ist hierbei die Verwendung eines Mehrstellungstrennschalters der unterbrechungslos die Einspeiseleitungen bzw. Kabelabgänge auf die Sammelschienensysteme (SS1 und SS2) umschaltet.

EP 0 195 894 A2

- 2 -

Die Erfindung betrifft eine Schaltanlage gemäß dem
Oberbegriff des Patentanspruches 1.

Schaltanlagen bilden Knotenpunkte der elektrischen
Netze zur Übertragung und Verteilung der elektrischen Energie. In diesen Knotenpunkten können eine
oder mehrere Energie einspeisende Leitungen sowie
ein oder mehrer Lastabgänge miteinander verbunden
werden. Aufgabe der Schaltgeräte ist es dabei, die
elektrischen Verbindungen herzustellen sowie Betriebs- und/oder Kurzschlußströme zu schalten. Üblich ist bisher, in jede Leitung, die zu- oder abgeschaltet werden soll, einen Last- oder Leistungsschalter zu setzen.

Die Entwicklung bei Schaltanlagen und Schaltgeräten
ist unter anderem gekennzeichnet durch einen deutlichen Kostendruck. Es sind deshalb Vorschläge unterbreitet worden, Schaltaufgaben in einer Anlage mit
mehreren Ab- und/oder Zugängen mit einer verringerten Anzahl von Schaltgeräten durchzuführen.

In der Patentanmeldung Aktenz. K11405, Kl. 21c,
Gr. 27/03 wird vorgeschlagen, in einer Doppelsammelschienenanlage den Kuppelschalter zwischen den
Sammelschienen als zentralen Leistungsschalter für
alle Abgänge und Einspeisungen der Schaltanlage zu

...

verwenden. In den einzelnen Abgängen und Einspeisungen entfallen dann die Leistungsschalter, und
es sind nur jeweils zwei zu den Sammelschienen
führende Trennschalter notwendig. Durch entsprechende zeitlich synchronisierte Steuerung der zu
einer Leitung gehörenden beiden Trennschalter und
des zentralen Kuppelschalters können Lastzuschaltungen und Lastabschaltungen erfolgen, wobei die
Trennerbetätigung jeweils im stromlosen Zustand erfolgt. Vor und nach einer Schalthandlung ist der
Kuppelschalter geöffnet. Nachteil einer solchen
Schaltanlage und eines solchen Verfahrens der Betätigung ist, daß für eine Aus- oder Einschaltung
fünf Schalthandlungen vorzunehmen sind. Kurzschlußabschaltungen, die sehr schnell erfolgen müssen,
können wegen dieses Nachteils mit diesem Verfahren
der Betätigung nicht erfolgen. Aus diesem Grunde
sind in der angeführten Patentanmeldung Sicherungen
in jedem Abgang un in jeder Einspeisung vorgesehen,
die die schnelle Kurzschlußabschaltung übernehmen.

Der vorliegenden Erfingung liegt die Aufgabe zugrunde, eine Schaltanlage mit nur einem Last-oder
Leistungsschalter sowie ein Verfahren zu deren

...

- 4 -

Betätigung zu schaffen, die ein schnelleres Schalten infolge einer Reduzierung der für ein Ein- und Ausschaltungen notwendigen Schalthandlungen und Schaltgeräte ermöglicht. Bei einer Schalthandlung an einem Abgang sollen die übrigen Zu- und Abgänge nicht unterbrochen werden. Eine solche Anlage und ein entsprechendes Verfahren zur Betätigung würden eine schnellere, einfachere Lastschaltung ermöglichen und drüber hinaus auch Kurzschlußabschaltungen durch den Leistungsschalter und somit eine Vermeidung von Sicherungen in den einzelnen Abgängen und Einspeisungen möglich machen.

Erfindungsgemäß wird dies erreicht durch die im Kennzeichen der Ansprüche 1, 3 und 5 angegebenen Merkmale. Dadurch, daß das für Lastschaltungen und/oder Kurzschlußabschaltungen zuständige Schaltgerät als Kuppelschalter zwischen zwei Sammelschienen geordnet ist und die Einspeiseleitungen sowie die Lastabgänge mit beiden Sammelschienen durch unterbrechungsfrei umschaltbare Mehrstellungstrennschalter zu verbinden sind, ist bei Lastschaltungen oder Fehlerabschaltungen mit dieser Lösung die synchronisierte Ansteuerung von nur jeweils zwei Schaltgeräten nötig.

...

0195894

- 5 -

Mehrstellungstrennschalter sind grundsätzlich bekannt und werden insbesondere bei $SF_6$-isolierten
Mittelspannungs-Schaltanlagen in Reihenschaltung
mit einem Leistungsschalter eingesetzt (H.Kind-
ler, E.Reichl: Metallgekapselte, $SF_6$-isolierte
Mittelspannungs-Schaltanlagen Baureihe WI mit
Vakuum-Leistungsschaltern, Techn. Mitt. AEG-Telefunken 72 (1982), S. 72 - 79). Ein Mehrstellungstrennschalter vereinigt üblicherweise die Funktion
von einem Trenner und einem Erder innerhalb eines Gerätes. Solche Mehrstellungstrennschalter haben jedoch
nicht die Aufgabe und sind nicht in der Lage, unter
Stromfluß zu schalten. Deshals sorgt eine Verrieglungsschaltung dafür, daß nur bei geöffnetem Leistungsschalter der Mehrstellungstrennschalter geschaltet werden kann.

Der vorgeschlagene Mehrstellungstrennschalter unterscheidet sich von den bekannten Ausführungen dadurch,
daß durch entsprechende Ausführung der Kontakte (K1,
K2, K3) ein unterbrechungs- und funkenlose Umschalten
des Stromes von einer Sammelschiene auf die andere
möglich ist. Über die Funktion eines bekannten Mehrstellungstrennschalters hinaus kann er einen Abgang

...

also mit zwei oder auch mehreren Sammelschienen verbinden und er kann von einer Sammelschiene auf eine andere Sammelschiene unterbrechungsfrei umschalten.

Erfindungsgemäß wird das folgende Verfahren zur Betätigung des als Kuppelschalter angeordneten Last- oder Leistungsschalters sowie des dem zu schaltenden Stromkreis zugehörigen Mehrstellungstrennschalter vorgeschlagen. Im Normalzustand ist die im weiteren als Hilfssammelschiene bezeichnet Sammelschiene stromlos und der gesamte Stromfluß der Schaltanlage erfolgt über die andere, im weiteren als Hauptsammelschiene bezeichnete Sammelschiene. Der Kuppelschalter zwischen Hauptsammelschiene und Hilfssammelschiene ist im Normalzustand geschlossen. Betrachtet sei nun ein über einen Mehrstellungstrenner mit der Hauptsammelschiene verbundener Abgang unter Last, der abgeschaltet werden soll. Zum Abschalten wird zunächst der Abgang mit Hilfe des Mehrstellungstrennschalter unterbrechungsfrei auf die Hilfssammelschiene kommutiert, so daß der Stromfluß dieses Abgangs nun über die Hilfssammelschiene und den geschlossenen Kuppelschalter zur Hauptsam-

...

melschiene erfolgt. Nach vollständiger Kommutierung und nach Erreichen des für die erforderliche
Isolationsfestigkeit benötigten Abstandes zwischen
dem Hauptsammelschienenkontakt K1 und dem beweglichen Kontakt K3 des Mehrstellungstrennschalters 4
erfolgt durch Öffnen des Kuppelschalters S1 die
Stromunterbrechung. Bei geöffnetem Kuppelschalter S1
wird nun der Mehrstellungstrennschalter 4 in die
Trennstellung d bewegt und damit der Abgang von der
Hilfssammelschiene getrennt. Danach wird der Kuppelschalter S1 wieder geschlossen und der Schaltvorgang
ist beendet. Je nach technischer Ausführung kann die
Bewegung des Mehrstellungstrennschalters 4 kontinuierlich oder schrittweise erfolgen, wobei in jedem
Fall eine zeitliche Synchronisation der Stellung des
Mehrstellungstrennschalters mit der Stellung des
Kuppelschalters erfolgen muß. Ein Einschaltvorgang
läuft erfindungsgemäß wie folgt ab. Vor dem Einschalten ist der Kuppelschalter geschlossen und der Mehrstellungstrennschalter 4 ist in der Trennstellung.
Beim Einschalten wird zunächst der Kuppelschalter S1
geöffnet und dann der Abgang über den Mehrstellungstrennschalter mit der Hilfssammelschiene SS2 verbunden. Daraufhin wird der Kuppelschalter S1 geschlossen

...

und die Einschaltung ist erfolgt. Es wird nun
noch der Stromfluß unterbrechnungsfrei von der
Hilfssammelschiene SS2 auf die Hauptsammelschiene
SS1 kommutiert.

Besonders vorteilhaft ist die Anwendung der Erfindung in $SF_6$-isolierten Schaltanlagen, da hier die
Kontaktabstände des unterbrechungsfrei umschaltbaren Mehrstellungstrennschalters, wegen der hohen
Isolierfähigkeit von $SF_6$ vergleichsweise klein
gestaltet werden können.

Die Verfahren zum Zuschalten und Abschalten einer
Leitung werden zweckmäßig durch eine entsprechende
elektrische und/oder mechanische Kupplung der Antriebe des Kuppelschalters und des jeweiligen
Mehrstellungstrennschalters durchgeführt. Zum
Schalten ist dann nur ein auf die beiden beteiligten Schaltgeräte wirkender Schaltbefehl notwendig.

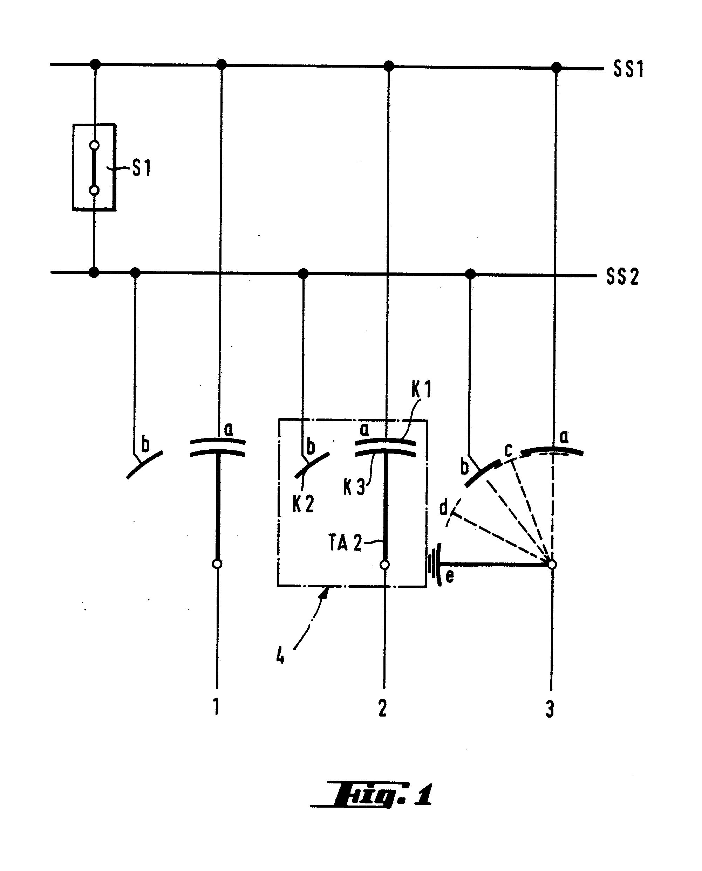

An dem in Fig. 1 gezeigten Ausführungsbeispiel der
Erfindung werden die Anordnung der Schaltgeräte
sowie der Schaltungsablauf genauer erläutert.

. . .

Die Mehrstellungstrennschalter (4) der Einspeiseleitung (1) und der Lastabgänge (2, 3) prinzipgleich aufgebaut und sind in der geschlossenen
Stellung (a) mit der Hauptsammelschiene (SS1)
verbunden. Die geschlossene Stellung eines Mehrstellungstrennschalters ist für die Einspeiseleitung (1) und den Lastabgang (2) dargestellt.
Das Leistungs- oder Lastschaltgerät (S1) als Kuppelschalter bezeichnete Schaltgerät ist zwischen der
Hauptsammelschiene (SS1) und der Hilfssammelschiene
(SS2) angeordnet und im Betriebszustand geschlossen. Soll nun ein Laststrom oder Kurzschlußstrom
im Lastabgang (2) ausgeschaltet werden, so wird
der Mehrstellungstrennschalter (4) angesteuert.
Der Trennerarm (TA2) bewegt sich vom Kontakt (K1)
hinüber zum Kontakt (K2) (Stellung 3), wobei der
Abstand zwischen (K1) und (K2) so auf die Breite
des Kontaktes (K3) des Trennerarmes (TA2) abgestimmt ist, daß eine Kommutierung des Stromflusses von der Hauptsammelschiene (SS1) über den
Kontakt (K1) auf die Hilfssammelschiene (SS2)
über den Kontakt (K2) unterbrechnungs- und funkenlos erfolgt. Nach dem die galvanische Trennung

...

der Kontakte (K1) und (K3) erfolgt ist und diese
Kontakte einen für die nun erforderliche Isolationsfestigkeit ausreichenden Abstand haben,
öffnet der Kuppelschalter (S1) und unterbricht
den Strom. Durch entsprechende Synchronisation
der Drehgeschwindigkeit des Trennerarms (TA2)
wird sichergestellt, daß bis zur Unterbrechung
des Stromes die Kontakte (K2) und (K3) (Stellung c) weiterhin galvanisch verbunden sind. Der
Trennerarm (TA2) bewegt sich nach der erfolgten
Stromunterbrechung weiter, bis er die geöffnete
Trennstellung (d) erreicht hat. Daraufhin wird
der Kuppelschalter (S1) wieder geschlossen und
der Vorgang ist beendet.

Ein Einschaltvorgang soll ebenfalls am Beispiel
des Lastabganges (2) erläutert werden. Zunächst
öffnet der Kuppelschalter (S1) und aus der Trennstellung heraus bewegt sich der Trennerarm (TA2)
in Richtung Kontakt (K2). Die Trennstellung eines
Mehrstellungstrennschalters 4 ist für den Lastabgang (3) dargestellt. Nach galvanischer Berührung
der Kontakte (K2) und (K3) schließt der Kuppel-

...

0195894

- 11 -

schalter (S1) wieder. Der Stromfluß erfolgt dann zunächst also über die Hilfssammelschiene (SS2) und den Kontakt (K2). Der Trennerarm (TA2) bewegt sich weiter in Richtung des Kontaktes (K1). Wenn die

galvanische Trennung der Kontakte (K2) und (K3) erfolgt, kommutiert der Strom unterbrechungs-

und funkenlos auf den Kontakt (K1) und der Trennerarm (TA2) bewegt sich in seine Endstellung.

Der Einschaltvorgang ist damit beendet.

. . .

- 12 -

P a t e n t a n s p r ü c h e

1) Elektrische Schaltanlage, insbesondere Mittelspannungs-Schaltanlage mit zwei Sammelschienen,
die mittels eines Kuppelschalters elektrisch
miteinander zu verbinden sind, wobei mit dem
Kuppelschalter die Last- bzw. Leistungsschaltungen für eine Vielzahl von Zu- und Abgängen
durchführbar sind, die jeweils über Trennschalter mit beiden Sammelschienen kuppelbar sind,
d a d u r c h   g e k e n n z e i c h n e t ,
daß die Einspeiseleitungen und die Lastabgänge
(1, 2, 3) durch jeweils einen Mehrstellungstrennschalter mit den beiden Sammelschienen
(SS1, SS2) verbindbar sind, von denen eine die
Haupt- (SS1) und die andere eine Hilfssammelschiene (SS2) bildet, daß die Mehrstellungstrennschalter in einer seiner Ein-Stellungen
(a) eine galvanische Verbindung zwischen
der jeweiligen Einspeiseleitung bzw. Lastabgang (1, 2, 3) und der Hauptsammelschiene
(SS1) herstellt, und in einer weiteren Ein-
Stellung (b) mit der Hilfssammelschiene (SS2)

. . .

kuppelbar ist, daß die Mehrstellungstrennschalter derart ausgebildet sind, daß bei
Umschaltungen der Übergang von der Hauptsammelschiene (SS1) zur Hilfssammelschiene
(SS2) mittels einer Schleifkontaktanordnung
(K1, K2, K3) unterbrechnungslos erfolgt,
und daß die jeweiligen Einspeiseleitungen
bzw. Lastabgänge (1, 2, 3) während des Betriebes mit der Hauptsammelschiene (SS1) über
den Mehrstellungstrennschalter (4) direkt
elektrisch in Verbindung stehen, während nur
bei Ein- und Ausschaltungen     diese über
den jeweiligen Mehrstellungstrennschalter in
seiner anderen Ein-Stellung (b) solange mit
der Hilfssammelschiene (SS2) elektrisch verbunden bleibt, bis der zwischen der Haupt-
(SS1) und Hilfssammelschiene (SS2) angeordnete
Kuppelschalter (S1) für die nunmehr elektrisch
dazu in Reihe liegende Einspeiseleitung oder
Abgang (1, 2, 3) die Ein- oder Auschaltung
durchgeführt hat.

...

2) Elektrische Schaltanlage nach Patentanspruch 1,
d a d u r c h   g e k e n n z e i c h n e t ,
daß für jede Einspeiseleitung oder Kabelabgang
(1, 2, 3) jeweils einen prinzipgleich ausgebildeten Mehrstellungstrennschalter (4) vorgesehen
ist, der mindestens folgende Schalt- bzw.
Schaltzwischenstellung hat:

Stellung (a)  =  Einspeiseleitungen bzw. Kabelabgänge (3) sind verbunden mit
Hauptsammelschiene (SS1)

Stellung (b)  =  Einspeiseleitungen bzw. Kabelabgänge (3) sind verbunden mit
Hilfssammelschiene (SS2)

Zwischenstellung (c)  =  Einspeiseleitungen bzw. Kabelabgänge (3) sind verbunden mit
Haupt- und Hilfssammelschiene
(SS1 und SS2)

...

Stellung (d) = Einspeiseleitungen bzw. Kabelabgänge (3) sind getrennt von
der Haupt- (SS1) und Hilfssammelschiene (SS2)

Stellung (e) = Einspeiseleitungen bzw. Kabelabgänge (3) sind verbunden mit
Erdkontakt

3) Schaltverfahren für die Schaltanlage, gemäß
den Ansprüchen 1 und 2, d a d u r c h   g e -
k e n n z e i c h n e t , daß vor und nach
einem Schaltvorgang alle auf Kabelabgänge
und Einspeiseleitungen (1, 2, 3) flie ßenden
Ströme durch entsprechende Stellung (a) der
jeweiligen Mehrstellungstrenner (4) über die
Hauptsammelschiene (SS1) fließen, und daß
die Hilfssammelschiene (SS2) stromlos ist,
wobei durch eine synchronisierte Ansteuerung
des Kuppelschalters (S1) und des Mehrstellungstrennschalters (4) der zeitliche Ablauf der
Schalthandlungen sicherg stellt wird.

...

4) Schaltverfahren gemäß Anspruch 3, d a -
d u r c h   g e k e n n z e i c h n e t, daß
vor und nach jeder Schalthandlung der zwischen
der Hauptsammelschienen (SS1) und der Hilfssammelschiene (SS2) angeordnete Kuppelschalter
(S1) in geschlossenem Zustand ist.

5) Schaltverfahren gemäß einem der Ansprüche
3 und 4, d a d u r c h   g e k e n n z e i c h-
n e t , daß beim Ausschalten eines in einem Kabelgang oder in den Einspeiseleitungen (1, 2, 3)
fließenden Stromes zu nächst durch Betätigung
des entsprechenden Mehrstellungstrenners (4) der
Strom dieses Leitungszuganges auf die Hilfssammelschiene (SS2) unterbrechungs- und funkenlos
kommutiert wird, und daß daraufhin der Strom
durch Öffnen des Kuppelschalters (4) unterbrochen
wird, und daraufhin der entsprechende Mehrstellungstrenner (4) in die Trennstellung (d) bewegt und der
Kuppelschalter (S1) wieder geschlossen werden.

...

6) Schaltverfahren gemäß einem der Ansprüche
3 bis 5, d a d u r c h g e k e n n z e i c h -
n e t , daß zum Einschalten eines Stromes zunächst der Kuppelschalter (S1) geöffnet wird
und durch Betätigung des entsprechenden Mehrstellungstrennschalter (4) aus der Trennstellung (d) heraus zum Kontakt (K2) der Hilfssammelschiene (SS2) hin und anschließendes Schließen
des Kuppelschalters (S1) der Strom eingeschaltet
wird, und daß anschließend der Stromfluß durch die
weitere Bewegung des Mehrstellungstrennschalters
(4) von der Hilfssammelschiene (SS2) auf
die Hauptsammelschiene (SS1) unterbrechnungs-
und funkenlos kommutiert wird.

7) Schaltanlage nach einem der Ansprüche
1 bis 2, d a d u r c h g e k e n n z e i c h -
n e t , daß die Verfahren zur Betätigung gemäß den Ansprüchen 3 bis 6 durch eine elektrische und/oder mechanische Zwangskopplung
der Antriebe des Kuppelschalters (4) mit

...

denen der Mehrstellungstrennschalters (4)
durchgeführt werden, und daß dadurch das Einschalten und das Ausschalten einer Leitung
(1, 2, 3) durch nur einen auf die beiden beteiligten Schaltgeräte wirkenden Schaltbefehl
erfolgt.

...

**Fig. 1**